# EUROPEAN PATENT APPLICATION

(11) **EP 2 525 301 A1**
(43) Date of publication of application: **21.11.2012**
(21) Application number: 11305609.7
(22) Date of filing: 19.05.2011
(51) Int. Cl.: G06F 21/22

(54) **Syntax-preserving software protection**

(71) Applicant: Thomson Licensing, 92130 Issy-les-Moulineaux (FR)
(72) Inventor: Maetz, Yves, 92443 Issy-les-Moulineaux cedex (FR); Eluard, Marc, 92443 Issy-les-Moulineaux cedex (FR); Lelievre, Sylvain, 92443 Issy-les-Moulineaux cedex (FR)
(74) Representative: Ruellan-Lemonnier, Brigitte

(57) **Abstract**

Software code comprising function blocks is protected by identifying (100) the function blocks to protect. For each identified function block, an integrity value is generated (110), the body of the function block is protected by encryption or permutation (120), the integrity value is appended to the protected body, and the original body is replaced by the protected body and the appended integrity value expressed as code (130) that is has no impact on the execution of the rest of the software code, preferably as a comment. If needed, one or more dummy functions that return a parameter is added to the body. Protected software code may then be compiled and executed even by non-compliant or unauthorized devices without error, although the result of the execution will be different from that obtained by a compliant and authorized device.

## Description

### TECHNICAL FIELD

The present invention relates generally to computer software, and more particularly to syntax-preserving protection of software source code.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

In order to protect source code, it may be desirable to encrypt the same.

One prior art encryption method is to encrypt the entire source code and decrypt it for compilation, execution, or both. It goes without saying that no part of the source code may be used without access to the decryption key.

Another prior art solution is to encrypt chosen parts of the source code. One such solution is XML (Extensible Markup Language) encryption. Using XML encryption, information is protected by extracting data (including surrounding tags), encrypting the extracted data and putting the encrypted data back inside special tags called EncryptedData and CipherData.

As an example, the following information:

```
       <Name>John Smith</Name>
       <CreditCard Limit='5,000' Currency='USD'>
         <Number>4019 2445 0277 5567</Number>
         <Issuer>Example Bank</Issuer>
         <Expiration>04/02</Expiration>
       </CreditCard>
```

may be protected as follows:

```
       <Name>John Smith</Name>
       <EncryptedData Type='http://www.w3.org/2001/04/xmlenc#Element'
       xmlns='http://www.w3.org/2001/04/xmlenc#'>
        <CipherData>
                 <CipherValue>A23B45C56</CipherValue>
         </CipherData>
       </EncryptedData>
```

XML encryption is described in XML Encryption syntax and processing, W3C recommendation, 10 December 2002, http://www.w3.org/TR/xmlenc-core/

While the solution works well, a drawback is that the protected information has a particular syntax. Hence the application that receives the protected information must be able to interpret the syntax, which causes an interoperability problem, in particular with earlier versions. In the case of software code, a call to the unencrypted information is bound to fail, since this information cannot be found in the encrypted information. In the worst case, this can result in a crash of the application.

It will therefore be appreciated that there is a need for a solution for source code encryption that still enables a non-compliant device or unauthorized user to load, compile and use, i.e. execute or interpret, the source code, though preferably with changes in functionality, while compliant devices and authorized users may access the entire functionality. The present invention provides such a solution.

### SUMMARY OF INVENTION

In a first aspect, the invention is directed to a method for protecting software code comprising at least one function having a header and a body. A protection device protects at least one instruction of the body to obtain at least one protected instruction and replaces the at least one instruction by the at least one protected instruction, stated so that it has no impact on the execution of the rest of the software code.

In a first preferred embodiment, the protection device further generates an integrity value for at least the at least one instruction and appends the generated integrity value to the at least one protected instruction.

In a second preferred embodiment, protection of the at least one instruction comprises encryption.

In a third preferred embodiment, the header defines return parameters and the protection device further adds to the body at least one extra instruction that return the defined parameters.

In a fourth preferred embodiment, the protected instruction or the generated integrity value is stated as dead code or at least one comment.

In a second aspect, the invention is directed to a device for protecting software code comprising at least one function having a header and a body. The device comprises a processor adapted to protect at least one instruction of the body to obtain at least one executable protected instruction and replace the at least one instruction by the at least one protected instruction stated so that it has no impact on the execution of the rest of the software code.

In a third aspect, the invention is directed to a method for processing protected software code comprising at least one executable function having a header and a body comprising a protected instruction stated so that it has no impact on the execution of the rest of the software code. A device extracts the protected instruction from the body; unprotects the extracted protected instruction to obtain at least one unprotected instruction; and replaces the protected instruction by the at least one unprotected instruction.

In a first preferred embodiment, the device further extracts a first integrity value for the function from the protected function, calculates a second integrity value for the unprotected function, compares the first and the second integrity values and performs the replacing step only in case the first and the second integrity values match.

In a second preferred embodiment, the at least one unprotected instruction is executed.

In a third preferred embodiment, unprotection of the protected code comprises decryption.

In a fourth preferred embodiment, the device further removes at least one extra instruction.

In a fourth aspect, the invention is directed to a device for processing protected software code comprising at least one function having a header and a body comprising a protected instruction stated so that it has no impact on the execution of the rest of the software code. The device comprises a processor adapted to extract the protected instruction from the body, unprotect the extracted protected instruction to obtain at least one unprotected instruction, and replace the protected instruction by the at least one unprotected instruction.

In a fifth aspect, the invention is directed to a computer program product comprising stored computer-executable instructions that, when executed by a processor performs the steps of the method of any embodiment of the first aspect.

In a sixth aspect, the invention is directed to a computer program product comprising stored computer-executable instructions that, when executed by a processor performs the steps of the method of any embodiment of the second aspect.

In a seventh aspect, the invention is directed to a computer program product comprising protected software code that has been protected by the software protection method of any embodiment of the first aspect.

### BRIEF DESCRIPTION OF DRAWINGS

Preferred features of the present invention will now be described, by way of non-limiting example, with reference to the accompanying drawings, in which
Figure 1 is a flow chart that illustrates a source code protection method according to a preferred embodiment of the present invention;
Figure 2 is a flow chart that illustrates a source code unprotection method according to a preferred embodiment of the present invention;
Figure 3 illustrates possible outcomes of compilation and execution of protected source code;
Figure 4 illustrates a device for software protection according to a preferred embodiment of the present invention; and
Figure 5 illustrates a device for unprotection of protected software according to a preferred embodiment of the present invention.

### DESCRIPTION OF EMBODIMENTS

According to the present invention, software code is not protected as a monolith. Instead, the protection is directed to parts of the software code, called function blocks. A function block is a group of instructions that comprise at least one entry point, one or more instructions and one or more exit points. A function block may be called independently by other function blocks. Each function block comprises a header block ("header") comprising the name of the function block and acting as an entry point, and a body comprising the instructions.

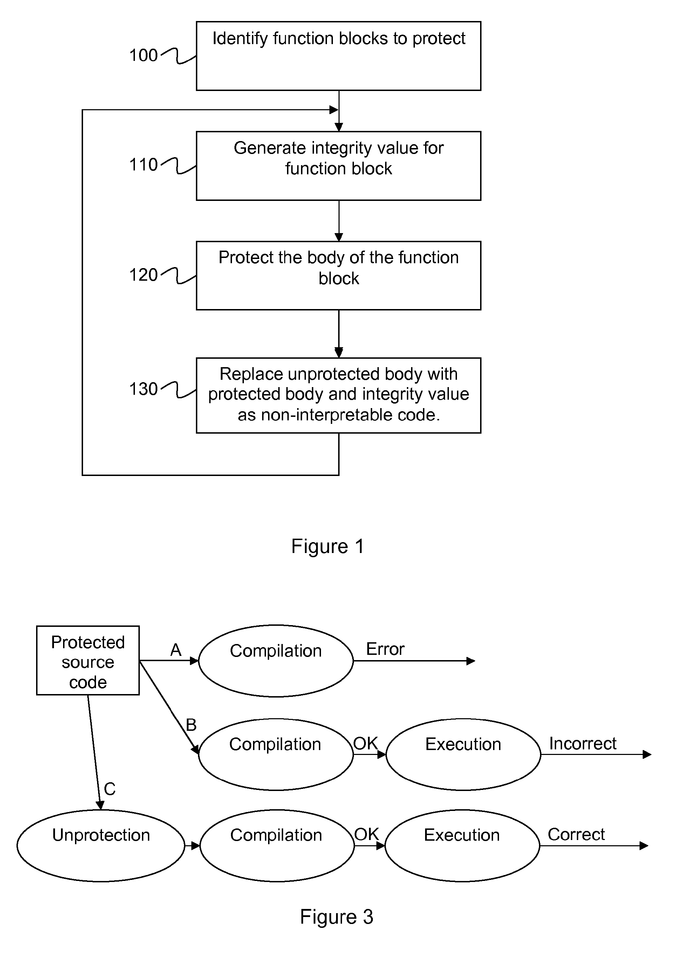

Figure 1 is a flow chart that illustrates a source code protection method according to a preferred embodiment of the present invention. As will be appreciated, the protection method preferably ensures not only the confidentiality of the function block but also its integrity.

First, the function blocks to protect are identified, step 100. The choice may be made by an operator, but it may also be made by a software program that performs the protection method illustrated in Figure 1, e.g. by taking into account meta-data associated with each function block (such as "to be protected") or following a naming convention in which functions to be protected are named accordingly (e.g. starting by "PROT"). It can also be done fully automatically. A device (not shown) that executes a program for software protection according to the present invention obtains the function blocks to protect, if this has not already been done.

The device may protect one function block before passing on to the next or proceed using partial or full parallelism.

An integrity value is calculated over the function block, step 110. The integrity value may be calculated over the whole function block, i.e. over header and body, or over the body only. Any suitable method for generating an integrity value may be used, provided that a receiver is able to generate the same value to check the integrity value. Examples of suitable methods are check sum and hash value generation methods.

In step 120, the body of the function block is protected to yield a protected body. It is important to note that the header (at least the name of the function, but preferably also the variables) is left untouched. Once again, any suitable protection method may be used, such as for example encryption using a key (e.g. using the AES or DES algorithm) or permutation of the characters (or blocks of bits).

It will be appreciated that there is no functional difference between protecting the instructions comprised between defining characters (e.g. { and }) defining the body and putting the protected instructions within the defining characters, and protecting also the defining characters and putting new defining characters around the protected data comprising instructions and defining characters. Both possibilities are considered to be covered by statements such as 'the body', 'protecting the body' etc.

It will also be appreciated that it is possible to protect a subset of the instructions of the body. However, this may cause problems in e.g. the compilation of the protected code; it is thus preferred to protect all the instructions of the body.

Then, in step 130, the original (unprotected) body is removed and the protected body and the integrity value are inserted in its place. Necessary indicators are also inserted. The protected body and the integrity value are inserted as non-impacting code, i.e. code that does not impact the execution of the rest of the software code. The impacting code may be dead code or a comment. Dead code, e.g. declaration of variables that are not used elsewhere, may be compiled, interpreted or executed by a compiler or an executing device, while comments are neither interpreted nor executed; indeed, they tend to be removed during compilation.

Somewhat simplified, an interpreted language (e.g. APL and JavaScript) is executed by an interpreter at run-time, while a compiled language (e.g. ADA, C and C++) is first passed through a compiler to generate machine code that then may be executed. For some interpreted languages such as Java use so called just-in-time compilation, in which the source code is put into an intermediate representation during execution, which may be said to be a compromise between interpretation and compilation.

Preferably, the protected body and the integrity value are inserted as a comment, since compilers and executing devices ignore comments -that is to say that comments do not give rise to any executable instruction -and since a comment may contain practically any kind of information. In case there is a length restriction to the comments, the information to insert may be split over a plurality of comments. It is advantageous that there are no other instances of the same type of 'non-executed' code in the protected source code; in other words, it is for example advantageous that the only comments in the protected source code are comments that comprise protected function blocks. Further, as most integrity value methods provide a fixed-length integrity value, it is usually possible to append the integrity value to the protected body, i.e. protected body | | integrity value.

For certain programming languages, in case the protected function returns a value (this may be detected through analysis of the header or the instructions in the body, e.g. through detection of 'return' statements), it may be necessary to insert an extra return instruction that returns an expected number of parameters of the expected type(s). This way, the protected function block returns the same parameters as the unprotected function block, though their values are likely to be different from those returned by unprotected code. Extra instructions may also be inserted for other reasons, for example to initialize variables.

When all the identified function blocks have been protected, the protected source code may be output, for example by storage or transmission to a receiver.

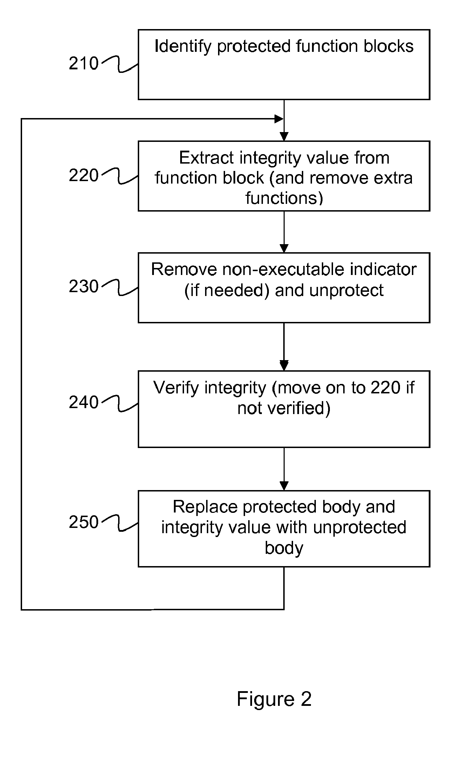

Figure 2 is a flow chart that illustrates a source code unprotection method according to a preferred embodiment of the present invention. As mentioned above, it may be performed just-in-time. Unprotecting protected source code essentially mirrors the protection method. First, the protected function blocks are identified. This is preferably done by searching for the 'non-executable' instructions in the function blocks. If there are non-interpretable instructions that do not comprise a protected body, then it is preferred that the protected bodies are identified as such, e.g. by "PROTECTED:..."

A device executes a software program for unprotecting the protected software code. The device may proceed by first identifying, step 210, the protected function blocks (comprising non-impacting code) and then unprotecting them (in series or in parallel), but it is preferred that the device unprotects the protected function blocks as they are detected.

For each function block, the integrity value is extracted and any extra instructions are removed, step 220. Then the protected body is extracted, signs that indicate that the instruction is 'non-executable' are removed if necessary, and the extracted information is unprotected using the reverse of the protection method, step 230. The integrity of the body may then be verified using the integrity value, step 240, and, in case of positive verification, the body is inserted into the place of the non-interpretable and the extra instruction(s), step 250. The instructions in the function block may then be executed.

It is preferred that the protected function block is kept as is in case an error occurs, e.g. if the integrity is not successfully verified.

It will be appreciated that aspects such as user authorization and key management are out of the scope of the present invention.

It will also be appreciated that software protection according to the present invention can ensure the confidentiality of the source code. An authorized (compliant) recipient of protected code is able to load, unprotect, compile and execute the source code. On the other hand, a non-authorized or non-compliant recipient is preferably able to load, compile and execute the protected source without compilation or execution errors, but the result of the execution is different when compared to the unprotected version of the same code, i.e. the version executed by an authorized user.

Figure 3 illustrates possible outcomes of compilation and execution of protected source code. As already mentioned in the background section, using state of art protection techniques, non-compliant and/or unauthorized users may risk a compilation error ("A"), although this is preferably avoided by the use of e.g. suitable programming languages.

With the present invention however, a non-compliant and/or unauthorized user ("B") is able to compile the source code without error and execute the compiled source code, but the execution yields an incorrect result.

Finally, with the present invention, an authorized user ("C") is able to unprotect the source code, compile the unprotected source code and the execution yields the expected result.

The protection of the present invention can be used when the source code needs to be compiled during run-time on the execution platform. This is for example the case when the target platform is unknown before the execution or when using languages designed for wide-scale interoperability.

In a preferred embodiment, the source code is written in JavaScript and the semantic is preserved in the protected source code, which means that the situation of the upper row in Figure 3 is avoided.

In JavaScript, a function block ("function") is expressed using the following syntax:
**function** *identifier* (*parameter list* OR *empty*) {*statement list*}

As can be seen, a JavaScript function may be decomposed into two blocks:
- a header: **function** *identifier* (*parameter list* OR *empty*), and
- a body: {*statement list*}

JavaScript functions do not declare any return value.

In JavaScript, a comment is 'non-executable' code that is identified in that it begins with // (two slashes).

To protect the body, the ASCII representation of the *statement list* is encrypted using AES (Advanced Encryption Standard) and the integrity value is generated using SHA-1. The result is interpreted in its ASCII representation.

A protected generic JavaScript function thus looks this: 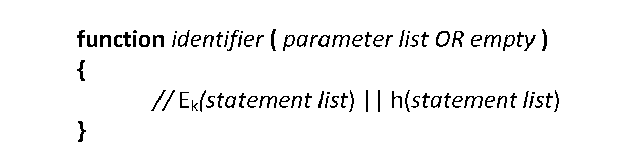 wherein Eₖ denotes AES encryption using a key k and h denotes the SHA-1 hash function.

An exemplary function to protect is:

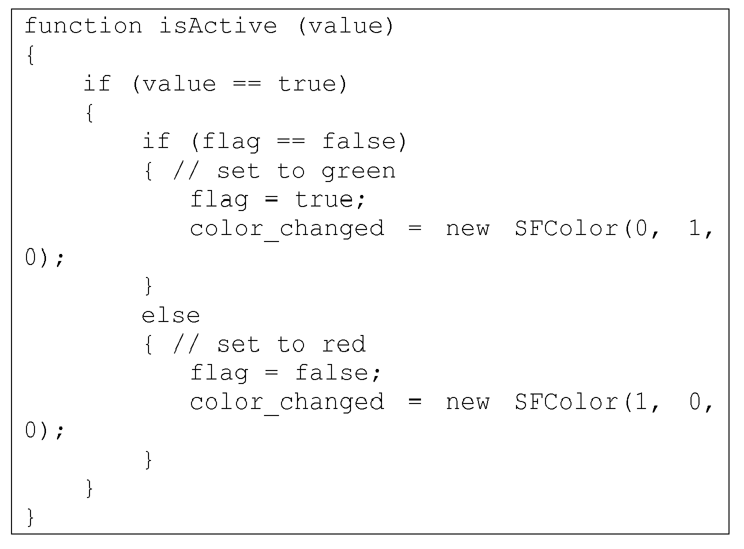

which can give the following protected function that includes the integrity value:

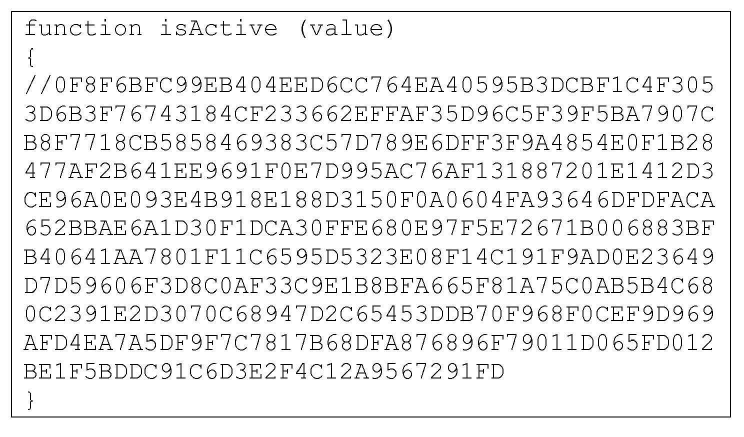

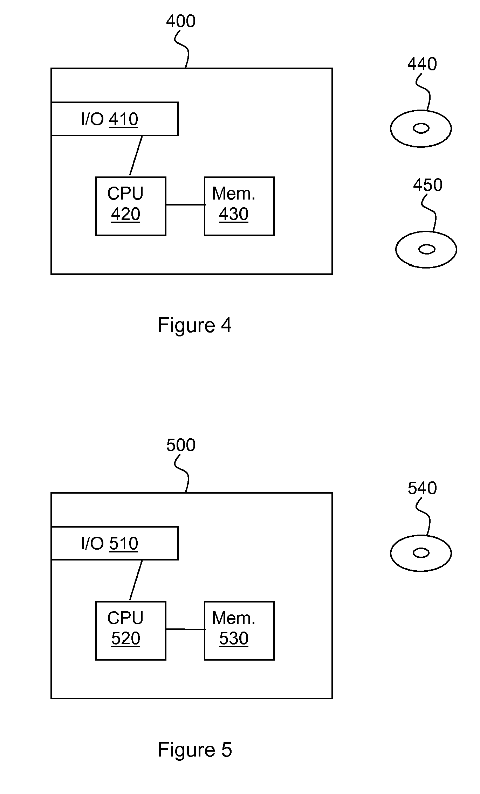

Figure 4 illustrates a device for software protection according to a preferred embodiment of the present invention. The device 400 comprises at least one interface unit 410 adapted for communication with other devices (not shown), at least one processor 420 and at least one memory 430 adapted for storing data, such as an encryption key and intermediary calculation results. The processor 420 is adapted to protect software code using a method according to the present invention. A computer program product 440 such as a CD-ROM or a DVD comprises stored instructions that, when executed by the processor 420, performs the protection method according to any of the embodiments of the invention. A computer program product 450 such as a CD-ROM or a DVD comprises software code protected by the present invention.

Figure 5 illustrates a device for unprotection of protected software according to a preferred embodiment of the present invention. The device 500 comprises at least one interface unit 510 adapted for communication with other devices (not shown), at least one processor 520 and at least one memory 530 adapted for storing data, such as a decryption key and intermediary calculation results. The processor 520 is adapted to unprotect software code using a method according to the present invention. The processor 520 is further adapted to compile, if needed, and execute unprotected software code. A computer program product 540 such as a CD-ROM or a DVD comprises stored instructions that, when executed by the processor 520, performs the unprotection method according to any of the embodiments of the invention.

It is possible, especially for source code in a compiled language, to use two devices: a compiler that unprotects the source code and an execution device that executes the unprotected source code. It will however be appreciated that a preferred embodiment uses a single device that uses just-in-time compilation (or interprets the source code) as this means that the unprotected source code does not appear in the clear outside the device.

It will be appreciated that the present invention can ensure confidentiality of source code during its distribution. The protection of the source code can be semantic safe: the protected source code can be compiled and executed without crashing, but only compliant software with correct rights can use it and get the correct result.

Each feature disclosed in the description and (where appropriate) the claims and drawings may be provided independently or in any appropriate combination. Reference numerals appearing in the claims are by way of illustration only and shall have no limiting effect on the scope of the claims.

## Claims

1. A method for protecting software code, the software code comprising at least one function having a header and a body, the method comprising the steps, at a protection device (400), of:
- protecting (120) at least one instruction of the body to obtain at least one protected instruction; and
- replacing (130) the at least one instruction by the at least one protected instruction, stated so that it has no impact on the execution of the rest of the software code.

2. The method of claim 1, further comprising the steps of:
- generating (110) an integrity value for at least the at least one instruction; and
- appending the generated integrity value to the at least one protected instruction.

3. The method of claim 1, wherein protection of the at least one instruction comprises encryption.

4. The method of claim 1, wherein the header defines return parameters and the method further comprises the subsequent step of adding to the body at least one extra instruction that return the defined parameters.

5. The method of claims 1 or 2, wherein the protected instruction or the generated integrity value is stated as dead code or at least one comment.

6. A device (400) for protecting software code, the software code comprising at least one function having a header and a body, the device (400) comprising a processor (420) adapted to:
- protect at least one instruction of the body to obtain at least one protected instruction; and
- replace the at least one instruction by the at least one protected instruction stated so that it has no impact on the execution of the rest of the software code.

7. A method for processing protected software code, the protected software code comprising at least one executable function having a header and a body comprising a protected instruction stated so that it has no impact on the execution of the rest of the software code, the method comprising the steps, at a device (500), of:
- extracting (230) the protected instruction from the body;
- unprotecting (230) the extracted protected instruction to obtain at least one unprotected instruction; and
- replacing (250) the protected instruction by the at least one unprotected instruction.

8. The method of claim 7, further comprising the steps of:
- extracting (320) a first integrity value for the function from the protected function;
- calculating (340) a second integrity value for the unprotected function;
- comparing (340) the first and the second integrity values; and
- performing the replacing step only in case the first and the second integrity values match.

9. The method of claim 7, further comprising the step of executing the at least one unprotected instruction.

10. The method of claim 7, wherein unprotection of the protected instruction comprises decryption.

11. The method of claim 7, further comprising the step of removing at least one extra instruction.

12. A device (500) for processing protected software code, the protected software code comprising at least one function having a header and a body comprising a protected instruction stated so that it has no impact on the execution of the rest of the software code, the device (500) comprising a processor (520) adapted to:
- extract the protected instruction from the body;
- unprotected the extracted protected instruction to obtain at least one unprotected instruction; and
- replace the protected instruction by the at least one unprotected instruction.

13. A computer program product (440) comprising stored computer-executable instructions that, when executed by a processor performs the steps of any one of claims 1 to 6.

14. A computer program product (540) comprising stored computer-executable instructions that, when executed by a processor performs the steps of any one of claims 8 to 11.

15. A computer program product (450) comprising protected software code that has been protected by the software protection method of any one of claims 1 to 6.
